# EUROPEAN PATENT SPECIFICATION

(11) **EP 4 170 007 B1**
(45) Date of publication and mention of the grant of the patent: **04.03.2026**
(21) Application number: 21825839.0
(22) Date of filing: 16.06.2021
(51) Int. Cl.: C12C 11/00, A23L 2/38, C12G 3/025, C12C 11/11, C12C 12/00, C12C 12/04

(54) **METHOD FOR PRODUCING FERMENTED MALT LIQUID**
VERFAHREN ZUR HERSTELLUNG EINER FERMENTIERTEN MALZFLÜSSIGKEIT
PROCÉDÉ DE PRODUCTION DE LIQUIDE DE MALT FERMENTÉ

(30) Priority: 17.06.2020 JP 2020104615
(43) Date of publication of application: 26.04.2023
(73) Proprietor: Asahi Group Holdings, Ltd., Tokyo 130-8602 (JP)
(72) Inventor: MIYOSHI Miho, Moriya-shi, Ibaraki 302-0106 (JP); SUNAGAWA Tadahiro, Moriya-shi, Ibaraki 302-0106 (JP); OHUCHI Yuki, Moriya-shi, Ibaraki 302-0106 (JP); KANDA Tomomasa, Moriya-shi, Ibaraki 302-0106 (JP)
(74) Representative: Hoffmann Eitle
(86) International application number: PCT/JP2021/022784
(87) International publication number: WO 2021/256479

(56) References cited:
- EP-A1- 3 550 007
- CN-A- 110 656 004
- CZ-B6- 277 868
- DD-A5- 288 619
- DE-A1- 102008 018 608
- DE-B1- 2 629 298
- JP-A- 2013 146 213
- JP-A- 2015 027 309
- JP-A- S6 342 690
- RO-A2- 132 800
- US-A1- 2015 189 907
- LIANG WANG ET AL: "Comparative analysis of the fermentation performance of high-quality milk beer strains (Kluyveromyces marxianus) and optimisation of medium formula for high-density fermentation", INTERNATIONAL JOURNAL OF DAIRY TECHNOLOGY, SOCIETY OF DAIRY TECHNOLOGY, HUNTINGDON, GB, vol. 73, no. 3, 27 January 2020 (2020-01-27), pages 552 - 562, XP072057092, ISSN: 1364-727X, DOI: 10.1111/1471-0307.12670
- URIT THANET ET AL: "Growth ofKluyveromyces marxianusand formation of ethyl acetate depending on temperature", APPLIED MICROBIOLOGY AND BIOTECHNOLOGY, SPRINGER BERLIN HEIDELBERG, BERLIN/HEIDELBERG, vol. 97, no. 24, 9 October 2013 (2013-10-09), pages 10359 - 10371, XP035328748, ISSN: 0175-7598, [retrieved on 20131009], DOI: 10.1007/S00253-013-5278-Y

## Description

### TECHNICAL FIELD

The present invention relates to a method for producing a fermented liquid having a low ethanol concentration and a fruity aroma using saccharified malt as a fermentation raw material, and a method for producing a beverage including the fermented liquid produced by the above-mentioned production method as a raw material.

The present invention claims priority on the basis of Japanese Patent Application No. 2020-104615, filed in Japan on June 17, 2020.

### BACKGROUND OF THE INVENTION

In recent years, a wide variety of alcoholic beverages have been placed on the market associated with the diversification of consumer tastes. For example, there is an increasing demand for alcoholic beverages having a relatively low alcohol concentration because they are easier to drink. On the other hand, in the case of fermented alcoholic beverages, yeast produces various aroma components in addition to ethanol by fermentation, which contributes to the flavor of the beverage.

In fermented alcoholic beverages, each aroma component produced during fermentation depends on the type of yeast used in fermentation. Although the yeast most widely used in the brewing of beer or wine is the genus Saccharomyces, for example, beer having a flavor different from that of conventional beer has also been produced using yeast other than the genus Saccharomyces in recent years. For example, a method for producing a beer including a large amount of isoamyl acetate (IAAT) or ethyl acetate by allowing wort to ferment under an aerobic condition using yeast belonging to the genus Pichia such as Pichia kluyveri is known (Patent Document 1).

On the other hand, the development of foods or drinks utilizing fermentation with yeast is also being conducted actively in addition to that of alcoholic beverages. For example, a fermented beverage of saccharified rice flour, the digestibility and absorbability of which are excellent, can be obtained by fermenting a saccharified rice flour solution. A fermented beverage of saccharified rice flour, which is fruity and can take advantage of the sweetness of the saccharified rice flour solution itself, can be obtained by using a specific strain of Kluyveromyces marxianus, which is a yeast isolated from kefir, as the yeast (Non-Patent Document 1). Kluyveromyces marxianus has an ability of producing ethyl acetate from lactose only under aeration conditions (Non-Patent Document 2). DD 288 619 A5 discloses a method for preparing soft drinks with an alcohol content of 0.5 g / 100 g or less or low-alcohol drinks with an alcohol content of 4.5 g / 100 g or less, characterized in that raw materials are directly fermented by microorganisms such as Kluyveromyces.

CN 110 656 004 A discloses a flavored fermented beverage prepared using two types of fermentation strain.

CZ 277 868 B6 discloses a method for producing basic flavorings for non-alcoholic and lowalcoholic beverages by fermentation, characterized in that the medium containing glucose, fructose, maltose or sucrose as a carbon source, optionally in a complex medium, such as brewing wort, is fermented with microorganisms of the genera Brettanomyces, Debaryomyces, Saccharomycopsis, Hanseniaspora, Hansenula, Kluyveromyces, Lactobacillus, Pichia, Saccharomyces, Schizosaccharomyces, Sporidiobolus, Sporobolomyces, Torulasporium, Diphysoscharacus or Zygosacsacus .

RO 132 800 A2 discloses a method for obtaining a clear alcoholic beverage from germinated soy by fermentation with Kluyveromyces marxianus subsp. marxianus.

DE 10 2008 018608 A1 discloses a soft drink obtainable by fermenting yeast, lactic acid bacteria and acetic acid bacteria simultaneously or sequentially in different order in a N- and C-containing starting liquid suitable for the fermentation of microorganisms with at least two of the three types of microorganisms.

### DOCUMENTS OF RELATED ART

### Patent Documents

Patent Document 1: WO 2014/202564

### Non-Patent Documents

Non-Patent Document 1: Mihoko Tominaga et al., "Fermentation of Saccharified Solution from Rice Flour by Kluyveromyces marxianus HU-1, a Yeast Isolated from Kefir", Nippon Nogeikagaku Kaishi, 1998, Vol. 72, No. 4, pp. 481 to 488.
Non-Patent Document 2: Urit et. al., Engineering in Life Sciences, 2013, Vol. 13 (3), pp. 247 to 260.

### SUMMARY OF THE INVENTION

### PROBLEMS TO BE SOLVED BY THE INVENTION

There is a case in which the amount of aroma components is decreased or an unpleasant odor due to poor fermentation is caused by suppressing the degree of fermentation in order to keep the ethanol concentration low in the production of fermented alcoholic beverages.

The present invention aims to provide a method for producing a fermented malt liquid having a low ethanol concentration and a fruity aroma.

### MEANS TO SOLVE THE PROBLEMS

As a result of diligent research to solve the above-mentioned problems, the present inventors have found that aerated fermentation using yeast of Kluyveromyces marxianus species, which is not conventionally used to ferment a liquid fermentation material including saccharified malt, suppresses the production of ethanol, but promotes the production of aroma components such as esters, thereby obtaining a fermented malt liquid having a fruity aroma and a low ethanol concentration, and thus the present invention has been completed.

A method for producing a fermented malt liquid is, as defined in the appended claims.

### EFFECTS OF THE INVENTION

In the method for producing a fermented malt liquid according to the present invention, aerated fermentation is conducted using yeast of Kluyveromyces marxianus species having a low ethanol-producing ability and a high producing ability of esters such as ethyl acetate, isoamyl acetate, β-phenethyl acetate, or propyl acetate, or alcohols having 3 or more carbon atoms such as isoamyl alcohol or β-phenethyl alcohol. Thus, a fermented malt liquid having a low ethanol concentration and a fruity aroma can be provided by the method for producing a fermented malt liquid according to the present invention. Furthermore, the use of the fermented malt liquid makes it possible to provide a fermented malt beverage having a low ethanol concentration and a fruity aroma.

### BRIEF DESCRIPTION OF DRAWINGS

FIG. 1 is a figure which shows the result of the sensory test of "wort odor intensity" in Example 5.
FIG. 2 is a figure which shows the result of the sensory test of the "pear-like aroma" in Example 5.
FIG. 3 is a figure which shows the result of the sensory test of the "fruity aroma" in Example 5.
FIG. 4 is a figure which shows the correlation of "pear-like aroma" and "deliciousness" in Example 6.

### EMBODIMENTS FOR CARRYING OUT THE INVENTION

In the present invention and the present specification, the term "fermented malt beverage" means a beverage produced via a fermentation step using malt or a processed product thereof as a raw material with yeast. The fermented malt beverage may be an alcoholic beverage, or may be a so-called non-alcoholic beverage having an ethanol concentration of less than 1.0% (vol/vol) or a low-alcoholic beverage. Furthermore, the ethanol concentration in the fermented malt beverage is preferably less than 0.5% (vol/vol), more preferably less than 0.1% (vol/vol), and even more preferably less than 0.05% (vol/vol).

Examples of the fermented malt beverage include beer-like effervescent beverages. In the present invention and the present specification, the term "beer-like effervescent beverage" means an effervescent beverage having a flavor, taste and texture equivalent to or similar to those of beer and exhibiting a likeness to beer (a taste that is reminiscent of beer in terms of flavor). Specific examples of the fermented malt beer-like effervescent beverage include beer and low-malt beer made from malt. Additional examples thereof include liqueurs obtained by mixing fermented malt liquid with ethanol-including distilled liquid. The ethanol-including distillation liquid is a solution including ethanol obtained by a distillation operation, and a raw material alcohol (ethanol), or a distilled liquor (spirit) such as whiskey, brandy, vodka, rum, tequila, gin, or shochu may be used, for example.

The method for producing a fermented malt liquid according to the present invention includes a step in which yeast of Kluyveromyces marxianus species is inoculated into a liquid fermentation material including a saccharified malt to conduct aerated fermentation. The yeast of Kluyveromyces marxianus species has a lower ethanol-producing ability, but a higher producing ability of aroma components such as esters and alcohols having 3 or more carbon atoms than those of the yeast of the genus Saccharomyces when aerated fermentation is conducted. Therefore, a fermented liquid having a low ethanol concentration but abundantly including esters such as ethyl acetate, isoamyl acetate, β-phenethyl acetate, or propyl acetate can be obtained by using the yeast of Kluyveromyces marxianus species.

The yeast used in the present invention is not particularly limited as long as it is a yeast of the Kruivelomyces marxianus species. From the viewpoint of safety when the produced fermented malt liquid is applied to foods and drinks, it is preferable that the yeast of Kluyveromyces marxianus species be isolated from foods or drinks, materials thereof, or edible animals or plants. The yeasts of Kluyveromyces marxianus species may be used by conducting appropriate selection from strains of Kluyveromyces marxianus species available from strain storage organizations such as the Biotechnology Center in the National Institute of Technology and Evaluation (NBRC) or the National Collection of Yeast Culture (NCYC), or distribution sources.

In the present invention, the liquid fermentation material to be fermented by inoculation of the yeast of Kluyveromyces marxianus species includes a saccharified malt, and is not particularly limited as long as it includes a carbon source or a nitrogen source that can be utilized by the yeast of Kluyveromyces marxianus species. For example, the liquid fermentation material may consist of a saccharified malt, or may include a carbon source or a nitrogen source other than saccharified malt.

In the present invention and the present specification, the term "saccharified malt" means a product obtained by subjecting sugar in malt to saccharification treatment with various enzymes. The enzyme used in the saccharification treatment may be an enzyme originally contained in malt or an enzyme derived from a material other than malt. For example, water is added to malt or a pulverized product thereof and held at 50°C to 60°C, thereby obtaining a saccharified product due to amylase derived from malt. At this time, a saccharifying enzyme derived from a material other than malt may be further added, or an enzyme other than the saccharifying enzyme such as a proteolytic enzyme may be used in combination.

In the present invention, a wort or a malt extract may be used as the saccharified malt, for example. The malt extract is a concentrated wort and includes maltose as the main component thereof. The malt extract is directly diluted with carbonated water to make a beverage, or is used as a raw material for food or drink. Concentration of wort may be performed by a conventional method. Concentration under reduced pressure is preferable because the influence on components in the wort is suppressed, but concentration may also be conducted by heating to remove the solvent.

Wort is prepared by preparing a mixture including malt and raw water and heating the mixture to saccharify the starch in the malt. The malt is preferably used as a pulverized malt obtained by conducting pulverization treatment. The pulverization treatment for the malt may be carried out by a conventional method. The pulverized malt may be a product which has been subjected to a treatment usually performed before or after the pulverization treatment.

The mixture including malt and raw water may include fermentation raw materials other than the malt. The fermentation raw material may be a cereal raw material or a carbohydrate raw material. Examples of the cereal raw materials other than malt include: grains such as barley and wheat; rice; corn; beans such as soybeans; and potatoes. The cereal raw material· may also be used as pulverized cereal, cereal syrup, cereal extract or the like. The pulverized cereal may be a product obtained by subjecting to a treatment usually performed before or after the pulverization treatment, such as corn starch or corn grits. Examples of the carbohydrate raw material include sugars such as liquid sugar.

Although wort may be directly used as a liquid fermentation material, the wort is preferably subjected to boiling treatment before inoculating yeast. The boiling treatment makes it possible to conduct sterilization and fermentation more safely. When the boiling treatment is performed, it is preferable to remove any insoluble solid content by filtration or the like before the boiling treatment. The filtration treatment is not particularly limited, and may be appropriately selected from the solid-liquid separation treatments generally performed in the process for producing foods or drinks such as diatomaceous earth filtration and filter filtration. Furthermore, instead of the filtrate of this sugar liquid, a malt extract to which warm water is added may be used and boiled. The boiling method and conditions thereof may be appropriately determined.

A fermented malt liquid having a desired flavor can be produced by appropriately adding herbs or the like before or during the boiling treatment. In particular, hops are preferably added before or during the boiling treatment. The boiling treatment in the presence of hops makes it possible to efficiently extract the flavor and aroma components of hops. The amount of hops added, the mode of addition (for example, addition in several portions) and the boiling conditions may be appropriately determined.

It is preferable that lees such as proteins produced by precipitation be removed from the boiled wort before inoculating the yeast. Although the lees may be removed by any solid-liquid separation treatment, the precipitate is generally removed using a tank called a whirlpool. The temperature of the broth at this time may be 15°C or higher, and is generally about 50°C to 80°C. After removing the lees, the clear wort (filtrate) is cooled to an appropriate fermentation temperature using a plate cooler or the like. The wort after removing the lees becomes the liquid fermentation material.

The yeast of Kluyveromyces marxianus species is inoculated into the cooled liquid fermentation material to allow fermentation to proceed. The cooled liquid fermentation material may be directly subjected to fermentation, or may be subjected to fermentation after the extract concentration is adjusted to the desired level. In the present invention, the liquid fermentation material to be inoculated with the yeast of Kluyveromyces marxianus species has a Brix value of 9° to 16°, and even more preferably has a Brix value of 10° to 14°.

In the present invention and the present specification, the Brix value in the liquid fermentation material may be measured by a conventional method using a measuring device such as a refractometer (RX-5000α, manufactured by ATAGO CO., LTD.).

The fermented malt liquid can be obtained by subjecting the liquid fermentation material inoculated with the yeast of Kluyveromyces marxianus species to aerated fermentation. The ethanol production is further suppressed, the production amount of esters and alcohols having 3 or more carbon atoms is further increased, and a fermented malt liquid having a further improved aroma and a low ethanol concentration is obtained by allowing fermentation with the yeast of Kluyveromyces marxianus species to proceed under an aerobic condition.

Aerated fermentation is fermentation performed under aerobic conditions in which oxygen or air can be supplied into a medium, and can be performed by a conventional method. For example, a shaking cultivation method, a stirring cultivation method, and an aeration stirring cultivation method can be used. Furthermore, the stirring conditions and the aeration amount of air or oxygen gas may be any as long as they can keep the cultivation environment aerobic, and may be appropriately selected depending on the cultivation apparatus, the viscosity of the medium, and the like. For example, in the case of mass cultivation such as cultivation using a jar fermenter, cultivation may be conducted while monitoring the amount of dissolved oxygen in the fermented liquid to allow fermentation to proceed, and, at this time, air or oxygen gas may be continuously or intermittently aerated such that the amount of dissolved oxygen in the fermented liquid is a predetermined amount (for example, 1 ppm (mg/L)) or more.

The fermentation conditions in the method for producing a fermented malt liquid according to the present invention may be appropriately selected from conditions that can maintain the cultivation environment aerobic at the time of fermentation among general yeast fermentation conditions, and may be modified, as needed. For example, the fermentation temperature is 0°C to 35°C, preferably 12°C to 28°C, and more preferably 15°C to 25°C. Fermentation conducted within the above-mentioned temperature range allows esters and alcohols having 3 or more carbon atoms to be efficiently produced by the yeast of Kluyveromyces marxianus species. Although the fermentation time is not particularly limited, the fermentation time is preferably 7 days or less, more preferably 4 days or less, and even more preferably 3 days or less.

The thus produced fermented malt liquid has a low ethanol concentration and a large amount of aroma components. Examples of the aroma component include ethyl acetate, isoamyl acetate, isoamyl alcohol, β-phenethyl acetate (1-phenylethyl acetate), β-phenethyl alcohol (2-phenylethanol), and propyl acetate. Since these are causative components of the fruity aroma and the amounts of these components are high, the fermented malt liquid obtained by aerated fermentation with the yeast of Kluyveromyces marxianus species has an excellent fruity aroma.

The ethanol concentration of the fermented malt liquid obtained according to the present invention is not particularly limited. For example, when the liquid fermentation material having a Brix value of 9° to 16° is subjected to aerated fermentation, the ethanol concentration of the produced fermented malt liquid is less than 1.0% (vol/vol), preferably 0.5% (vol/vol) or less, more preferably 0.25% (vol/vol) or less, and even more preferably 0.15% (vol/vol) or less.

In the present invention and the present specification, the ethanol concentration in the fermented malt liquid or the beverage may be determined by, for example, an enzyme method using a multifunctional biosensor BF-5 (manufactured by Oji Scientific Instruments), a distillation-density (specific gravity) method, or a gas chromatography (GC: Gas Chromatography) analysis method, an oxidation method, or the like.

The fermented malt liquid obtained by the present invention preferably includes propyl acetate equal to or higher than the detection limit. Propyl acetate is an ester which is produced by aerated fermentation with the yeast of Kluyveromyces marxianus species, and is rarely detected in fermented liquid fermented with yeast of the genus Saccharomyces or the genus Pichia which are conventionally used for fermentation. The propyl acetate concentration in the fermented malt liquid obtained by the present invention is not particularly limited. For example, when the liquid fermentation material having a Brix value of 9° to 16° is subjected to aerated fermentation, the propyl acetate concentration in the produced fermented malt liquid is preferably 0.1 ppm (mg/L) or more, more preferably 0.4 ppm (mg/L) or more, and even more preferably 0.7 ppm or more (mg/L). Furthermore, when the liquid fermentation material having a Brix value of 9° to 16° is subjected to aerated fermentation, the propyl acetate concentration in the produced fermented malt liquid is preferably 20.0 ppm (mg/L) or less, more preferably 15.0 ppm (mg/L) or less, and even more preferably 10.0 ppm or less (mg/L).

Yeast of Kluyveromyces marxianus species also has an excellent ability to produce ethyl acetate. The ethyl acetate concentration in the fermented malt liquid obtained by the present invention is not particularly limited. For example, when the liquid fermentation material having a Brix value of 9° to 16° is subjected to aerated fermentation, the ethyl acetate concentration in the produced fermented malt liquid is preferably 50 ppm (mg/L) or more, more preferably 100 ppm (mg/L) or more, and even more preferably 150 ppm (mg/L) or more. When the liquid fermentation material having a Brix value of 9° to 16° is subjected to aerated fermentation, the ethyl acetate concentration in the produced fermented malt liquid is preferably 500.0 ppm (mg/L) or less, more preferably 450.0 ppm (mg/L) or less, and even more preferably 400.0 ppm (mg/L) or less.

The fermented malt liquid obtained by the present invention also includes a large amount of isoamyl acetate and isoamyl alcohol. The concentration of isoamyl acetate and the concentration of isoamyl alcohol in the fermented malt liquid obtained by the present invention are not particularly limited. For example, when the liquid fermentation material having a Brix value of 9° to 16° is subjected to aerated fermentation, the total concentration of isoamyl acetate and isoamyl alcohol in the produced fermented malt liquid is preferably 15 ppm (mg/L) or more, and more preferably 30 ppm (mg/L) or more.

The fermented malt liquid obtained by the present invention also contains a large amount of β-phenethyl acetate and β-phenethyl alcohol. The concentration of β-phenethyl acetate and the concentration of β-phenethyl alcohol in the fermented malt liquid obtained by the present invention are not particularly limited. For example, when the liquid fermentation material having a Brix value of 9° to 16° is subjected to aerated fermentation, the total concentration of β-phenethyl acetate and β-phenethyl alcohol in the produced fermented malt liquid is preferably 10 ppm (mg/L) or more, and more preferably 15 ppm (mg/L) or more.

The amount of esters such as ethyl acetate, isoamyl acetate, β-phenethyl acetate and propyl acetate or alcohols having 3 or more carbon atoms such as isoamyl alcohol and β-phenethyl alcohol in the fermented malt liquid or fermented malt beverage may be determined from the peak area of a chromatograph obtained by GC analysis, for example. The quantification method from the peak area is not particularly limited, and examples thereof include an area percentage method, an internal standard method, a standard addition method, and an absolute calibration curve method. Specifically, the amount can be determined by the method described in the following examples.

The fermented malt liquid obtained in the present invention may be directly used as a raw material for food or drink. The food or drink produced using the fermented malt liquid as a raw material is not particularly limited. Beverages are preferable, fermented malt beverages are more preferable, and fermented malt beer-like effervescent beverages are even more preferable as foods or drinks produced using the fermented malt liquid obtained in the present invention as a raw material.

For example, a fermented malt beverage may be obtained by subjecting the obtained fermented malt liquid to solid-liquid separation treatment to remove yeast and the like therefrom. The solid-liquid separation treatment may be any method as long as it can remove yeast and the like, and examples thereof include centrifugal separation treatment, diatomaceous earth filtration treatment, and filter filtration treatment using a filter having an average pore size of about 0.4 µm to 0.5 µm. These treatments may be conducted in combination. Furthermore, hops, hop extracts, flavors or the like may be added to the obtained fermented malt liquid to adjust the flavor of the fermented malt beverage. The flavor may be adjusted before the solid-liquid separation treatment or after the solid-liquid separation treatment. Furthermore, the fermented malt liquid after the solid-liquid separation treatment may be stored to be aged under low-temperature conditions of about 0°C. In order to produce a fermented malt beverage, a pH adjustment treatment, heat treatment or the like may be further carried out by a conventional method, for example.

The obtained fermented malt liquid may also be appropriately diluted to produce a fermented malt beverage having an extract concentration and an ethanol concentration within the desired ranges. The solution used for dilution is not particularly limited, and examples thereof include water and carbonated water. The dilution ratio is not particularly limited, and may be 2- to 10-fold, more preferably 2- to 5-fold, and even more preferably 2- or 3-fold, for example. The step of diluting the fermented malt liquid may be carried out after the completion of the fermentation step, after removing yeast or the like, or after aging the fermented malt liquid.

The concentration of ethanols, various esters, or alcohols having 3 or more carbon atoms in the fermented malt beverage obtained using the fermented malt liquid obtained in the present invention as a raw material is not particularly limited. The use of the fermented malt liquid obtained in the present invention as a raw material makes it possible to produce a fermented malt beverage having a low ethanol concentration and a fruity aroma. Examples of the fermented malt beverage include fermented malt beer-like effervescent beverages having a propyl acetate concentration of 0.1 ppm (mg/L) or more and an ethanol concentration of 0.5% (vol/vol) or less. The fermented malt beer-like effervescent beverage preferably has a propyl acetate concentration of 0.2 ppm (mg/L) or more, and more preferably 0.3 ppm (mg/L) or more. The fermented malt beer-like effervescent beverage preferably has a propyl acetate concentration of 20.0 ppm (mg/L) or less, more preferably 15.0 ppm (mg/L) or less, and even more preferably 10.0 ppm or less (mg/L). The ethanol concentration in the fermented malt beer-like effervescent beverage is preferably 0.25% (vol/vol) or less, more preferably 0.1% (vol/vol) or less, and even more preferably 0.05% (vol/vol) or less.

### Examples

Next, the present invention will be described in more detail with reference to Examples and Reference Examples, but the present invention is not limited to the following Examples and the like.

### <Analysis of aroma components such as ethyl acetate>

In the following experiments, the concentrations of ethyl acetate, isoamyl acetate, isoamyl alcohol, β-phenethyl acetate, and β-phenethyl alcohol in the liquid fermentation material, fermented malt liquid, or beverage were measured by GC analysis using hexyl alcohol and hexyl acetate as internal standards after extraction with carbon disulfide, unless otherwise specified.

Specifically, 30 g of a sample was collected in a container, 6 g of ammonium sulfate and 3 mL of carbon disulfide were added thereto, and 150 µL of a mixed solution composed of 500 ppm of hexyl alcohol and 20 ppm of hexyl acetate was added as internal standard substances, followed by subjecting the resultant to shaking and extraction for 10 minutes. Then, centrifugation was performed at 3,000 rpm for 10 minutes, and the solvent phase was collected and subjected to GC analysis. For GC analysis, 2 µL of the collected solvent phase was injected into a column (DB-FFAP, 30 m × 0.25 mm ID; 0.25 µm F.T., manufactured by Agilent) by a split injection method, and then held at 40°C for 2 minutes, followed by raising the temperature to 230°C at 7°C/min and then maintaining the temperature for 10 minutes. The concentration of each component in the analysis sample was calculated by generating a calibration curve for each component from the ratio of the peak area of each component to the peak area of an internal standard, in which hexyl alcohol was used as the internal standard when the component was ethyl acetate, isoamyl acetate, isoamyl alcohol, or β-phenethyl alcohol, whilst hexyl acetate was used as the internal standard when the component was β-phenethyl acetate.

### <Analysis of propyl acetate>

In Examples 1 and 2, propyl acetate in the fermented malt liquid or the beverage was measured by a SPME-GC/MS (Solid Phase Micro Extraction-Gas Chromatography / Mass Spectrometry) method. Specifically, the adsorbed components were subjected to GC/MS analysis. First, 5 g of a sample was collected in a 20 mL vial and mixed, followed by loosening the lid for degassing. The resultant was stirred while heating the vial at 60°C for 30 minutes, and then the gas phase component of the headspace was adsorbed on SPME (DVB/CAR/PDMS (manufactured by SUPELCO), film thickness 50/30 µm, length 1 cm) to be subjected to GC/MS analysis (splitless method, column DB-WAX manufactured by Agilent, 60 m × 0.250 mm × 0.25 µm). The GC/MS analysis was performed by holding the temperature at 38°C for 10 minutes, raising the temperature to 230°C at 3°C/min, and then maintaining the temperature for 23 minutes. The propyl acetate concentration in the sample was calculated by the standard addition method.

In Examples 3 and 4, propyl acetate in the fermented malt liquid or the beverage was measured by a head space-gas chromatography / mass spectrometry (HS-GC/MS: Head Space-Gas Chromatography / Mass Spectrometry) method. Specifically, 1 ml of the sample and 3 g of sodium chloride were added to 9 ml of ultrapure water, and propyl acetate in the sample was measured by the HS-GC/MS method. The concentration of propyl acetate in the sample was quantified using an absolute calibration curve method. Specifically, first, a calibration curve was generated from the amount of component (µg) and the peak area value using a standard substance. The amount of propyl acetate (µg) was determined from the peak area value of propyl acetate measured by the HS-GC/MS method using the calibration curve, and the value was divided by the amount of the sample (mL) to quantify the concentration of propyl acetate (µg/mL) in the sample.

Here, it was confirmed that the concentration of propyl acetate in the sample quantified by the standard addition method after measuring propyl acetate in the sample by the SPME-GC/MS method was almost identical to the concentration of propyl acetate in the sample quantified by the absolute calibration curve method after measuring propyl acetate in the sample by the HS-GC/MS method.

### <Measurement of ethanol concentration>

In the following experiments, the ethanol concentration in the fermented malt liquid or the beverage was measured by the following method, unless otherwise specified.

A solution obtained by diluting the sample with distilled water such that the ethanol concentration became 0.5% to 2.0% (vol/vol) was measured by a multifunctional biosensor (BF-5, manufactured by Oji Scientific Instruments). The value obtained by multiplying the resultant measurement value by the dilution ratio was taken as the ethanol concentration (% (vol/vol)) in the sample.

The multifunctional biosensor is a device that electrochemically detects hydrogen peroxide (H₂O₂) generated by oxidation by alcohol oxidase, and can measure the total concentration of methanol and ethanol. Since yeast does not biosynthesize methanol, the fermented malt liquid contains only a trace amount of methanol, which can be considered to be within the margin of error. Therefore, the measured value by the multifunctional biosensor is the measured value of the ethanol amount in the fermented malt liquid sample.

In the case of a sample in which the ethanol concentration was less than 0.5%, the ethanol concentration was measured using the multifunctional biosensor (SL04-0015, manufactured by Oji Scientific Instruments) by subjecting a solution obtained by diluting the sample such that the alcohol concentration was 0.01% to 0.04% (vol/vol) to a high-sensitivity measurement method using a buffer solution free from sodium azide.

### <Brix measurement>

In the following experiments, the Brix value of the liquid fermentation material, fermented malt liquid, or beverage was measured using a digital refractometer (RX-5000α, manufactured by ATAGO CO., LTD.), unless otherwise specified.

### <pH measurement>

In the following experiments, the pH of the liquid fermentation material, fermented malt liquid, or beverage was measured by a pH-measuring device (LAQUAtwin-pH-33, manufactured by HORIBA), unless otherwise specified.

### <Oligosaccharide measurement>

In the following experiments, the oligosaccharide in the liquid fermentation material, fermented malt liquid, or beverage was analyzed by HPLC (high-performance liquid chromatography) (Prominence (trademark) (manufactured by Shimadzu Corporation); RI detector: RID-20A (manufactured by Shimadzu Corporation); and column for hydrocarbon analysis: Aminex HPX-42A carbohydrate column (manufactured by BIO-RAD)), unless otherwise specified. HPLC analysis was performed at a column temperature of 80°C using degassed ultrapure water as a mobile phase at a flow rate of 0.5 mL/min.

### Example 1

A diluted solution of wort or malt extract was subjected to aerated fermentation using 6 types of yeast of Kluyveromyces marxianus species, and the constitution of the resultant fermented liquid was examined. NBRC260 strain (isolated from an atmosphere), NBRC272 strain (isolated from miso), NBRC277 strain, NBRC482 strain (isolated from a mash solution of kaoliangchiu), NBRC483 strain (isolated from a squeezed yeast from Korea (Korean yeast cake)) and NBRC690 strain (which are strains stored by the Biotechnology Center in the National Institute of Technology and Evaluation) were used.

### <Preparation of liquid fermentation material (a)>

Wort (a) was produced using a 200 L-scale preparation facility. 40 kg of a pulverized malt and a starchy auxiliary raw material as fermentation raw materials and 160 L of raw water were put into a preparation tank, and the mixture in the preparation tank was heated and saccharified by a conventional method. Then, hops were added to a filtrate obtained by filtering the resultant saccharified liquid, and then the mixture was boiled. The filtrate after boiling was transferred to a settling tank to separate and remove the precipitate, and then the resultant was cooled to obtain wort (a). The analytical values of the resultant wort (a) were as follows. The wort (a) diluted with water so as to have a Brix value of 11° was used as a liquid fermentation material (a).

**Table 1**

| Wort (a) | |
|---|---|
| Brix Value | 12.8° |
| Fructose | 0.4% |
| Glucose | 1.2% |
| Total sugar concentration | 17.6% |
| pH | 5.2 |

### <Preparation of liquid fermentation materials (b) to (d)>

Three types of malt extracts shown in Table 2 were diluted with water such that the Brix value became 11°, followed by mixing the resultant, and then sterilizing the mixture by autoclave to obtain liquid fermentation materials (b) to (d).

**Table 2**

| Liquid fermentation material | Name of malt extract | Manufacturer | Producer country | Brix value | pH | Hop |
|---|---|---|---|---|---|---|
| (b) | Lager | Manton Breumaker | England | 81.5° | 4.92 | Presence |
| (c) | Maltax 10 | Senson | Finland | 84.6° | 5.05 | Absence |
| (d) | MALT ND (Unsaccharified) | Coopers | Australia | 81.8° | 5.21 | Absence |

### <100 mL stirring fermentation>

Six strains of yeast of Kluyveromyces marxianus species were each pre-cultured in the liquid fermentation material (a) at 25°C at an incubator rotational frequency of 160 rpm. Then, 100 mL of each liquid fermentation material shown in Table 3 was put in a 500 mL conical flask equipped with a baffle, followed by adding each of the pre-cultured yeast strains thereto such that the yeast count became 2.0×10⁵ cells/mL of the wort. The resultant in the conical flasks was aerated and stirred at an incubator rotational frequency of 160 rpm for 24 hours to 28 hours at 20°C. After the yeast count reached 1.3×10⁸ to 3.0×10⁸ cells/mL of the fermented liquid, the fermentation was terminated to obtain the fermented liquid. A fermented liquid was prepared from each of the liquid fermentation materials (b) to (d) using one strain of Kluyveromyces marxianus species in a similar manner to that of the case in which the liquid fermentation material (a) was used.

### <300 mL static fermentation>

300 mL of the liquid fermentation material (a) having a Brix value of 11° was put in a 500 mL sterilized disposable container (manufactured by Corning Incorporated), followed by adding yeast thereto such that the yeast count became 2.0×10⁷ cells/mL of the wort, and then allowing static fermentation to proceed at 20°C for three days, thereby obtaining a fermented liquid.

### <Analysis of various components>

The fermented liquid obtained after the completion of fermentation was subjected to centrifugation to collect the supernatant, and then filtered using a filter of 0.2 µm to remove yeast. The concentrations of ethanol and each aroma component in each fermented liquid after removing yeast were quantified by the above-mentioned method. The results are shown in Table 3.

### <Sensory evaluation of fermented malt beverage>

The fermented liquid after removing yeast was diluted 3-fold with carbonated water, and then a hop flavor was added to prepare a fermented malt beverage. The resultant fermented malt beverage was subjected to a sensory evaluation by five panelists.

**Table 3**

| Yeast strain | Cultivation manner | Liquid fermentation material | Ethanol [% (v/v)] | Ethyl acetate [ppm (mg/L)] | Isoamyl acetate + Isoamyl alcohol [ppm (mg/L)] | β-phenethyl acetate + β-phenethyl alcohol [ppm (mg/L)] | Propyl acetate [ppm (mg/L)] |
|---|---|---|---|---|---|---|---|
| NBRC 260 | | (a) | 0.01 | 468.9 | 37.6 | 41.5 | 2.59 |
| NBRC 272 | | | 0.03 | 175.5 | 41.9 | 42.5 | 0.92 |
| NBRC 277 | | | 0.03 | 199.0 | 31.6 | 26.5 | 2.64 |
| NBRC 482 | | | 0.03 | 236.1 | 33.3 | 34.8 | 1.55 |
| NBRC 690 | 100 mL/ Stirring | | 0.02 | 186.0 | 33.6 | 35.9 | 1.23 |
| NBRC 483 | | | 0.05 | 178.1 | 46.6 | 35.4 | 1.06 |
| NBRC 483 | | (b) | 0.13 | 261.6 | 43.3 | 36.6 | 1.39 |
| NBRC 483 | | (c) | 0.14 | 382.6 | 63.0 | 39.0 | 1.37 |
| NBRC 483 | | (d) | 0.10 | 102.9 | 57.6 | 28.8 | 0.72 |
| NBRC 483 | 300 mL/ Static | (a) | 0.68 | 7.3 | 23.4 | 3.0 | Undetected |

The ethanol concentration of the fermented liquid obtained by the 300 mL static fermentation was 0.68% (vol/vol), whilst the ethanol concentrations of all fermented liquids obtained by the 100 mL stirring fermentation were less than z0.15% (vol/vol). Furthermore, all of the ethyl acetate concentration, the total concentration of isoamyl acetate and isoamyl alcohol, and the total concentration of β-phenethyl acetate and β-phenethyl alcohol in the fermented liquid obtained by 100 mL stirring fermentation were clearly higher than those of the fermented liquid obtained by 300 mL static fermentation. In particular, the ethyl acetate concentration of the fermented liquid obtained by 300 mL static fermentation was 7.3 ppm, whereas that of all of the fermented liquids obtained by 100 mL stirring fermentation was 100 ppm or more. Furthermore, propyl acetate, which was not detected in the fermented liquid obtained by 300 mL static fermentation, was detected at 0.72 ppm to 2.64 ppm in the fermented liquids obtained by 100 mL stirring fermentation.

In the sensory evaluation, all five panelists noticed a fruity aroma like pear in all of the fermented liquids obtained by 100 mL stirring fermentation, but did not notice such an aroma in the fermented liquid obtained by 300 mL static fermentation. Propyl acetate is one of the typical components causing an aroma of pear.

Namely, the stirring fermentation caused a decreased production amount of ethanol and an increased production amount of aroma components such as ethyl acetate, and particularly produced propyl acetate, which was an aroma component of pear, in comparison with static fermentation, regardless of the strain of yeast of Kluyveromyces marxianus species or the liquid fermentation material used. These results showed that the aerated fermentation using yeast of Kluyveromyces marxianus species made it possible to produce a fermented malt liquid having a low ethanol concentration and a strong fruity aroma, and the use of the fermented malt liquid made it possible to produce a fermented malt beverage having a low ethanol concentration and strong fruity aroma.

### Example 2

Fermentation was carried out by various methods using yeast of Kluyveromyces marxianus species and yeast of Pichia kluyveri species, and the constitution of the resultant fermented liquid was investigated. As the yeast of Kluyveromyces marxianus species, the NBRC483 strain used in Example 1 was used.

### <Fermentation test in jar fermenter>

600 mL of the liquid fermentation material (a) used in Example 1 was put in a 2 L jar fermenter (manufactured by B.E.MARUBISHI CO., LTD.), and then a defoaming agent (KM-72GS, manufactured by Shin-Etsu Chemical Co., Ltd.) was added thereto such that the final concentration thereof became 0.165 g/L. Then, yeast was added such that the yeast count became 2.0×10⁵ cells/mL of the liquid fermentation material to allow the fermentation to proceed in the jar fermenter. The fermentation was started at 20°C, 240 rpm, and 0.5 vvm, the dissolved oxygen concentration was monitored, and the supply amount of oxygen was maintained by increasing the stirring rate such that the concentration of dissolved oxygen, which decreased in association with yeast growth, was maintained at 1 ppm (mg/L) or higher. In the case of NBRC483 strain, fermentation was terminated when the yeast count reached about 1.8×10⁸ cells/mL of the fermented liquid, thereby obtaining the fermented liquid. In the case of yeast of Pichia kluyveri species, fermentation was terminated when the yeast count reached about 2.0x10⁸ cells/mL of the fermented liquid, thereby obtaining the fermented liquid.

### <Fermentation test in fermentation tank>

60 L of the liquid fermentation material (a) used in Example 1 was put in a 100 L fermentation tank, and the defoaming agent KM-72GS was added thereto such that the final concentration thereof became 0.165 g/L. Then, yeast was added such that the yeast count became 2.0× 10⁵ cells/mL of the liquid fermentation material, thereby allowing fermentation to proceed in the fermentation tank. During fermentation, the liquid was pumped from a sampling valve port of the fermentation tank to an aeration line to allow the liquid to pass through a dissolved oxygen meter from a static mixer and then to return to the bottom of the tank for circulation. Intermittent aeration was performed such that the dissolved oxygen concentration was 1 ppm (mg/L) or more, while monitoring the amount of dissolved oxygen so as to prevent oxygen deficiency during yeast growth. In the case of the NBRC483 strain, fermentation was terminated when the yeast count reached about 1.8×10⁸ cells/mL of a fermented liquid, thereby obtaining the fermented liquid. In the case of the yeast of Pichia kluyveri species, fermentation was terminated when the yeast count reached about 3.0×10⁷ cells/mL of the fermented liquid, thereby obtaining the fermented liquid.

### <Static fermentation test>

7 L of the liquid fermentation material (a) used in Example 1 was put in a sterilized container (10 L STERITAINER, manufactured by SEKISUI SEIKEI CO., LTD..). Then, a yeast was added such that the yeast count became about 1.0×10⁷ cells/mL of the liquid fermentation material to allow static fermentation to proceed at 20°C for 6 days in the container, thereby obtaining a fermented liquid. The yeast count per mL of the fermented liquid at the end of fermentation was 1.4×10⁸ cells in the case of the NBRC483 strain and 6×10⁷ cells in the case of the yeast of Pichia kluyveri species.

### <Analysis of various components>

In the same manner as in Example 1, the ethanol concentration and the concentration of each aroma component in the fermented malt liquid obtained after the end of fermentation were quantified by the above-mentioned method. The results are shown in Table 4.

**Table 4 (Examples with Pichia kluyveri species shown for comparative purposes)**

| Yeast strain | Cultivation manner | Ethanol [% (v/v)] | Ethyl acetate [ppm (mg/L)] | Isoamyl acetate + Isoamyl alcohol [ppm (mg/L)] | β-phenethyl acetate + β-phenethyl alcohol [ppm (mg/L)] | Propyl acetate [ppm (mg/L)] |
|---|---|---|---|---|---|---|
| NBRC 483 | Jar fermenter | 0.15 | 61.0 | 41.2 | 15.8 | 0.16 |
| | Jar fermenter | 0.09 | 95.3 | 48.6 | 27.4 | 0.54 |
| | Fermentation tank | 0.13 | 121.2 | 48.9 | 10.3 | 0.69 |
| | Static | 0.81 | 5.8 | 35.4 | 9.4 | 0.01 |
| Pichia kluyveri species | Jar fermenter | 0.0 | 20.6 | 4.6 | 8.3 | Undetected |
| | Fermentation tank | 0.08 | 0.0 | 10.5 | 3.8 | 0.02 |
| | Static | 0.52 | 35.4 | 12.1 | 3.2 | 0.02 |

In the fermentation tests in the jar fermenter and the fermentation tank using the NBRC483 strain, a tendency similar to that of the case in which 100 mL stirring fermentation was conducted in Example 1 was confirmed in terms of the ethanol concentration and the aroma component contained. Namely, in all the test samples, the ethanol concentration was 0.15% (vol/vol) or less, the ethyl acetate concentration was 60 ppm (mg/L) or more, and the propyl acetate concentration was 0.15 ppm (mg/L) or more. In addition, those of other aroma components also tended to be high. In contrast, in the static fermentation test using the NBRC483 strain, and the static fermentation test and the aerated fermentation test using the yeast of Pichia kluyveri species, propyl acetate was detected only at the maximum amount of 0.02 ppm (mg/L), and ethyl acetate was detected at the maximum amount of 35.4 ppm (mg/L) (static test of the yeast of Pichia kluyveri species). Furthermore, the ethanol concentrations of the fermented liquids obtained in the static fermentation test were 0.81% (vol/vol) (the NBRC483 strain) and 0.52% (vol/vol) (the yeast of Pichia kluyveri species), which were higher than that in the aerated fermentation test.

### Example 3

Stirring fermentation test using yeast of Kluyveromyces marxianus species and other yeast species

Tests were conducted by aerating and stirring increased test strains using the liquid fermentation material (a) at the same initial yeast count, with the same container, at the same incubator rotational frequency, and at the same temperature as those in <100 mL stirring fermentation> in Example 1. NBRC483, which was the yeast of Kluyveromyces marxianus species used in Example 1, and NBRC10005, which was a type strain of the yeast of Kluyveromyces marxianus species, were used as the yeast. In addition, two strains of the yeast of Pichia kluyveri species commonly used in the production of non-alcoholic beer, one strain of the yeast of Torulaspora delbrueckii species, and one strain of the yeast of Saccharomycodes ludwigii species, one strain of the yeast of Saccharomyces cerevisiae species, and one strain of the yeast of Saccharomyces pastorianus species were used as control strains in the tests. In Table 5, the type strain of each yeast species is indicated as TS following the name of the yeast species. The fermentation time was 20 hours to 28 hours, and fermentation was performed until the yeast concentration of each yeast became OD₆₆₀ = 4.0 to 7.0 in turbidity, and then fermentation was terminated to obtain each fermented liquid. Since the yeast cells of Saccharomycodes ludwigii aggregated and it was difficult to measure the turbidity (OD₆₆₀), the cultivation thereof was terminated in conformity with the longest cultivation time among all the strains. The concentrations of ethanol and each aroma component of each fermented liquid are shown in Table 5.

**Table 5 (Examples with yeasts other than Kluyveromyces marxianus are shown for comparative purposes)**

| Yeast strain | Yeast species | Ethanol %ABV [% (v/v)] | Ethyl acetate [ppm (mg/L)] | Isoamyl acetate + Isoamyl alcohol [ppm (mg/L)] | β-phenethyl acetate + β-phenethyl alcohol [ppm (mg/L)] | Propyl acetate [ppm (mg/L)] |
|---|---|---|---|---|---|---|
| NBRC483 | Kluyveromyces marxianus | 0.072 | 300.3 | 48.4 | 35.9 | 1.3 |
| NBRC10005 | Kluyveromyces marxianus TS | 0.029 | 60.8 | 22.8 | 8.8 | 0.26 |
| NBRC1165 | Pichia kluyveri TS | 0.004 | 0.6 | 6.4 | 14.8 | Less than 0.01 |
| NBRC1988 | Pichia kluyveri | 0.013 | 0.4 | 14.7 | 23.1 | Less than 0.01 |
| FROOTZEN | Pichia kluyveri | 0.008 | 3.1 | 5.1 | 15.5 | Less than 0.01 |
| NBRC798 | Saccharomycodes ludwigii TS | 0.270 | 2.4 | 13.1 | 6.9 | Less than 0.01 |
| NBRC1083 | Torulaspora delbrueckii | 0.084 | 0.1 | 18.4 | 2.0 | Less than 0.01 |
| NBRC 104081 | Saccharomyces cerevisiae TS | 0.330 | 0.2 | 9.3 | 0.5 | Less than 0.01 |
| NBRC11024 | Saccharomyces pastorianus TS | 0.250 | 0.1 | 12.6 | 1.5 | Less than 0.01 |

As a result of the test, the ethanol concentration was less than 0.5% in all the test groups. Although the type strain NBRC1005 of the yeast of Kluyveromyces marxianus species tended to decrease the ethanol concentration in comparison with another strain of the yeast of Kluyveromyces marxianus species, the results satisfied an ethyl acetate concentration of 50 ppm or more and a propyl acetate concentration of 0.1 ppm or more. In contrast, the control strains caused ethyl acetate concentrations of at most about 3 ppm, and there was no sample in which propyl acetate was detected.

### Example 4

### Fermentation test with yeast of Kluyveromyces marxianus species at each Brix value in liquid fermentation material

The NBRC483 strains were each pre-cultured at an incubator rotational frequency of 160 rpm at 25°C. A malt extract, Maltax 10 (Senson), was diluted with water so as to have a Brix value of 4°, 7°, 9°, 12°, 16°, 18° and 20°, thereby obtaining liquid fermentation materials. 100 mL of each of these liquid fermentation materials was put into a 500 mL conical flask equipped with a baffle. Each pre-cultured yeast strain was added thereto such that the yeast count became 2.0×10⁵ cells/mL of the wort. The resultants in the conical flasks were stirred while conducting aeration at an incubator rotational frequency of 160 rpm for 26 hours to 30 hours at 20°C. When the yeast count reached about 1.8×10⁸ cells/mL, fermentation was terminated to obtain a fermented liquid. When the liquid fermentation material having a Brix value of 18° or 20° was used, the growth of the yeast took a considerable time, and the yeast count reached at most approximately 1.0×10⁸ cells even after cultivation for 30 hours. The test results obtained using the liquid fermentation material having each Brix value are shown in Table 6. In all the test groups, the ethyl acetate concentration was 50 ppm or more and the propyl acetate concentration was 0.1 ppm or more.

**Table 6 (Examples with Brix values of 4°, 7°, 18° and 20° are shown for comparative purposes)**

| Yeast strain | Liquid fermentation material (Brix value) | Yeast count at an end of fermentation (cells/ml) | Ethanol %ABV [% (v/v)] | Ethyl acetate [ppm (mg/L)] | Isoamyl acetate + Isoamyl alcohol [ppm (mg/L)] | β-phenethyl acetate + β-phenethyl alcohol [ppm (mg/L)] | Propyl acetate [ppm (mg/L)] |
|---|---|---|---|---|---|---|---|
| | 4° | 1.8 × 10⁸ | 0.003 | 62.9 | 18.1 | 18.9 | 0.66 |
| | 7° | 1.4 × 10⁸ | 0.030 | 162.4 | 33.3 | 27.0 | 1.1 |
| NBRC 483 | 9° | 1.4 × 10⁸ | 0.034 | 234.4 | 39.4 | 29.5 | 1.3 |
| | 12° | 1.3 × 10⁸ | 0.052 | 376.3 | 50.6 | 29.8 | 1.9 |
| | 16° | 1.6 × 10⁸ | 0.100 | 486.4 | 62.3 | 30.4 | 2.1 |
| | 18° | 9.0 × 10⁷ | 0.090 | 415.0 | 60.0 | 19.2 | 1.8 |
| | 20° | 1.1 × 10⁸ | 0.052 | 331.8 | 47.9 | 14.0 | 1.7 |

### Example 5

### Sensory evaluation

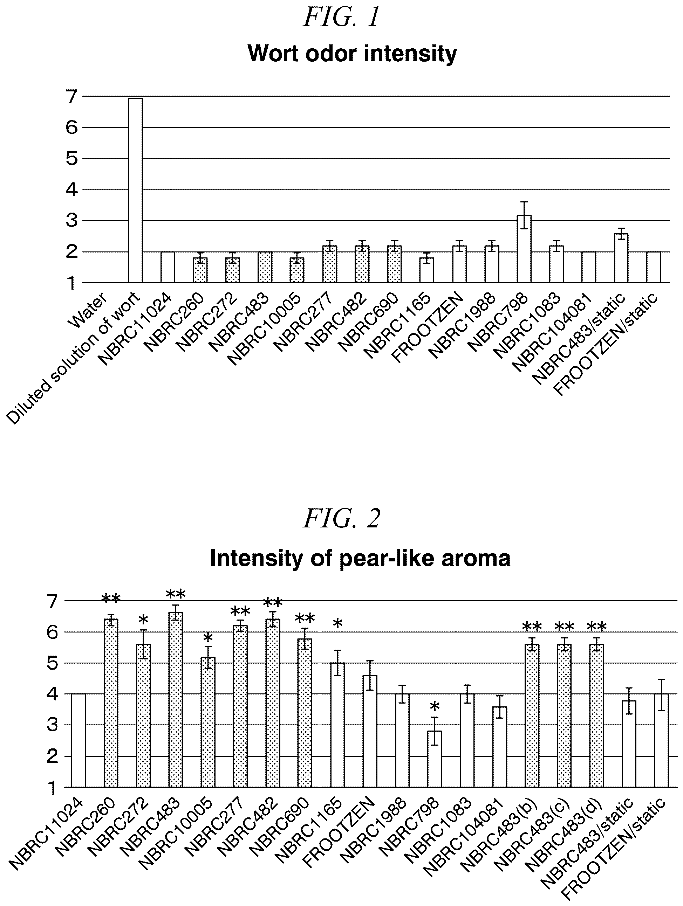

The fermented liquid obtained in the <100 ml stirring fermentation> of Example 1 and the fermented liquid obtained in Example 3 were diluted with carbonated water such that the Brix value of the liquid fermentation material became 5° (2.2-fold dilution), followed by adding a hop flavor thereto to prepare each beverage. Each of the obtained beverages was subjected to sensory evaluation by a scoring method by five skilled panelists. The "wort odor intensity" was evaluated based on water as 1 point and the diluted solution of the liquid fermentation material (a) as 7 points. However, the "wort odor intensity" of beverages of the fermented liquids obtained using the liquid fermentation materials (b), (c), and (d) was not evaluated, because the types of the liquid fermentation materials were different. The "pear-like aroma", "fruity aroma", and "deliciousness" of each beverage were evaluated based on a wort aerated and fermented by Saccharomyces pastorianus (NBRC11024), which is a typical brewer's yeast, as 4 points. The sensory evaluation was performed randomly so that the details such as the name of each beverage were hidden and the evaluation order was changed for every panelist. Aroma was evaluated in terms of the "wort odor intensity", "pear-like aroma", and "fruity aroma", and taste was evaluated in terms of "deliciousness". The evaluation results are shown in Tables 7 and 8 and FIGS. 1 to 3. Since the wort odor intensity was similarly low in all the beverages, it was considered sensuously that each fermented liquid was fermented to the same extent. In addition, it was confirmed that the beverage using the liquid aerated and fermented by the yeast of Kluyveromyces marxianus species had significantly stronger "pear-like aroma" and "fruity aroma" than those of the control. Student's t-test was used for the test (*: p <0.05, **: p <0.01). This feature was similarly confirmed when different types of wort were used. On the other hand, the beverages obtained using other yeast strains or the beverages obtained using the liquid statically fermented by the yeast of Kluyveromyces marxianus species did not acquire points significantly higher than those of the control in terms of the above-mentioned evaluation items. Thus, it is considered that the liquid aerated and fermented by the yeast of Kluyveromyces marxianus species is characterized by a sensuously strong "pear-like aroma" and "fruity aroma".

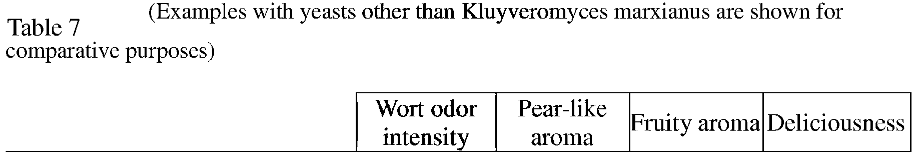

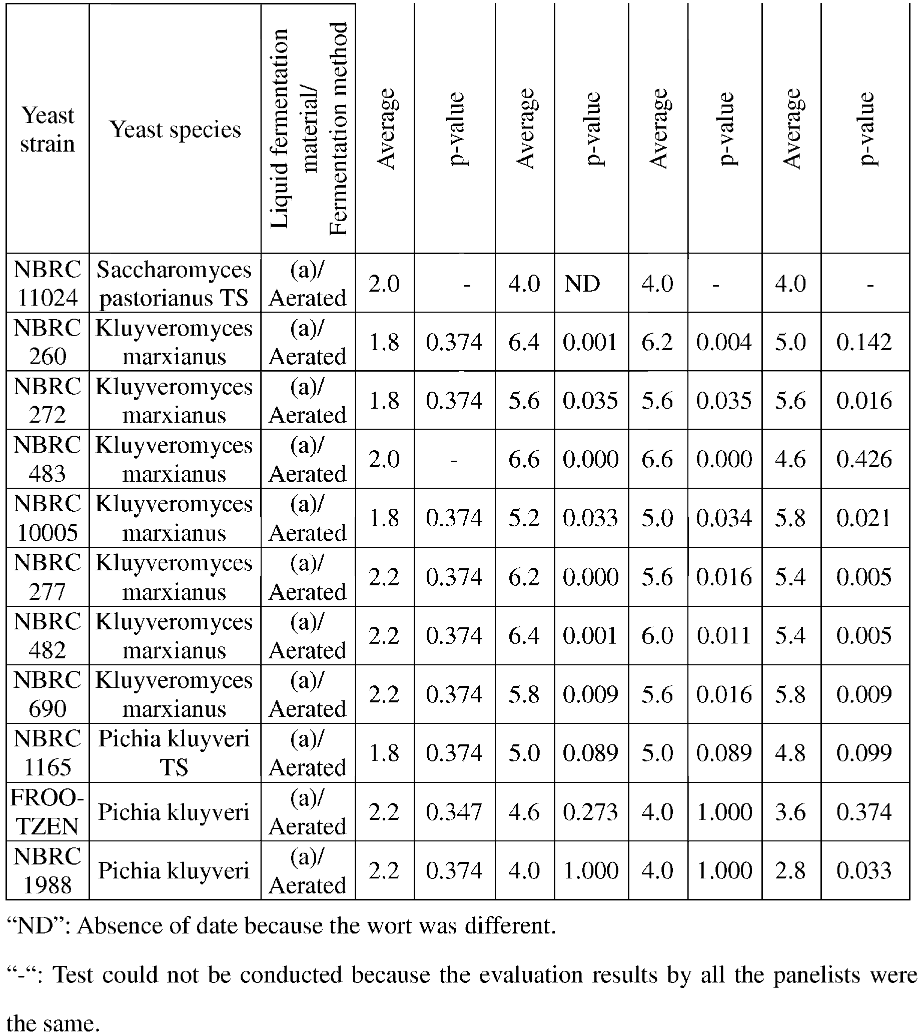

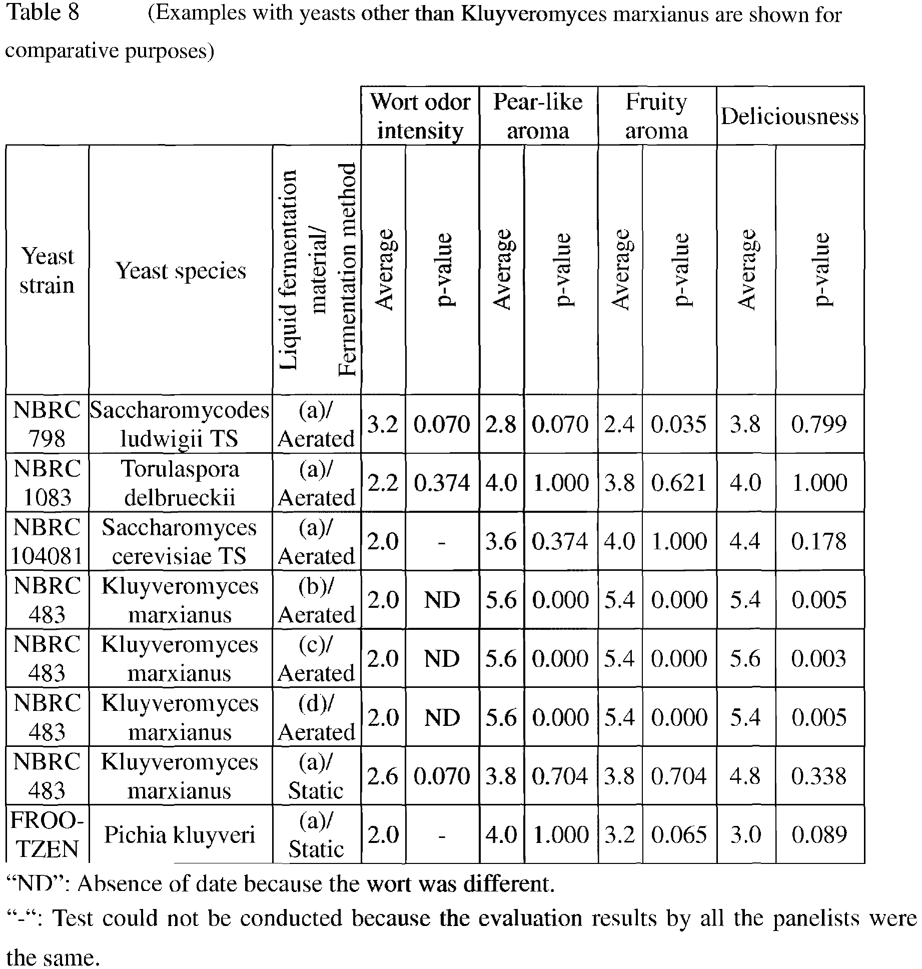

### Example 6

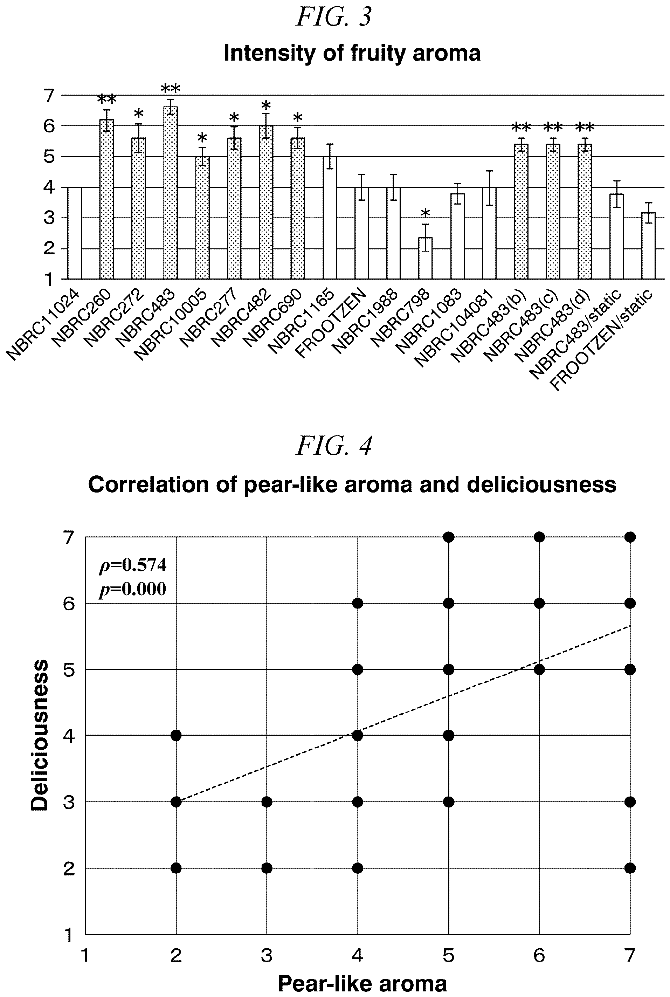

In order to investigate the relationship between "pear-like aroma" and "deliciousness", the correlation therebetween was investigated. Spearman's rank correlation coefficient was used for the significance test. As a result, it was confirmed that there was a significant positive correlation (p = 0.574, p = 0.000) between the deliciousness and the pear-like aroma (Fig. 4). It was found that the pear-like aroma of the fermented liquid leads to the deliciousness of the fermented liquid as a whole.

### INDUSTRIAL APPLICABILITY

In the method for producing a fermented malt liquid according to the present invention, the yeast of the Kluyveromyces marxianus specie, which has a low ethanol-producing ability and a high producing ability of esters such as ethyl acetate, isoamyl acetate, β-phenethyl acetate, or propyl acetate, or alcohols having 3 or more carbon atoms such as isoamyl alcohol or β-phenethyl alcohol, is used to conduct aerated fermentation. Therefore, the method for producing a fermented malt liquid according to the present invention makes it possible to provide a fermented malt liquid having a low ethanol concentration and a fruity aroma. Furthermore, the use of the fermented malt liquid makes it possible to provide a fermented malt beverage having a low ethanol concentration and a fruity aroma.

## Claims

1. A method for producing a fermented malt liquid, comprising a step in which a yeast of Kluyveromyces marxianus species is inoculated into a liquid fermentation material comprising a saccharified malt to conduct aerated fermentation,
wherein a Brix value in the liquid fermentation material is 9° to 16°.

2. The method for producing a fermented malt liquid according to claim 1, wherein a propyl acetate concentration in the fermented malt liquid is 0.1 ppm (mg/L) or more.

3. The method for producing a fermented malt liquid according to claim 1 or 2, wherein an ethanol concentration in the fermented malt liquid is 0.5% (vol/vol) or less.

4. The method for producing a fermented malt liquid according to any one of claims 1 to 3, wherein an ethyl acetate concentration in the fermented malt liquid is 50 ppm (mg/L) or more.

## Patentansprüche

1. Verfahren zur Herstellung einer fermentierten Malzflüssigkeit, umfassend einen Schritt, bei dem eine Hefe der Art Kluyveromyces marxianus in ein flüssiges Fermentationsmaterial, das ein verzuckertes Malz umfasst, inokuliert wird, um eine belüftete Fermentation durchzuführen,
wobei der Brix-Wert in dem flüssigen Fermentationsmaterial 9° bis 16° beträgt.

2. Verfahren zur Herstellung einer fermentierten Malzflüssigkeit gemäß Anspruch 1, wobei die Propylacetatkonzentration in der fermentierten Malzflüssigkeit 0,1 ppm (mg/l) oder mehr beträgt.

3. Verfahren zur Herstellung einer fermentierten Malzflüssigkeit gemäß Anspruch 1 oder 2, wobei die Ethanolkonzentration in der fermentierten Malzflüssigkeit 0,5 % (Vol./Vol.) oder weniger beträgt.

4. Verfahren zur Herstellung einer fermentierten Malzflüssigkeit gemäß mindestens einem der Ansprüche 1 bis 3, wobei die Ethylacetatkonzentration in der fermentierten Malzflüssigkeit 50 ppm (mg/l) oder mehr beträgt.

## Revendications

1. Procédé de production de liquide de malt fermenté, comprenant une étape dans laquelle une levure de l'espèce Kluyveromyces marxianus est inoculée dans une matière de fermentation liquide comprenant un malt saccharifié afin de réaliser une fermentation aérée,
dans lequel une valeur Brix dans la matière de fermentation liquide est de 9° à 16°.

2. Procédé de production de liquide de malt fermenté selon la revendication 1, dans lequel une concentration en acétate de propyle dans le liquide de malt fermenté est de 0,1 ppm (mg/L) ou plus.

3. Procédé de production de liquide de malt fermenté selon la revendication 1 ou la revendication 2, dans lequel une concentration en éthanol dans le liquide de malt fermenté est de 0,5 % (vol/vol) ou moins.

4. Procédé de production de liquide de malt fermenté selon l'une quelconque des revendications 1 à 3, dans lequel une concentration en acétate d'éthyle dans le liquide de malt fermenté est de 50 ppm (mg/L) ou plus.
